# EUROPÄISCHE PATENTANMELDUNG

(11) **EP 0 887 685 A1**
(43) Veröffentlichungstag der Anmeldung: **30.12.1998**
(21) Anmeldenummer: 98109061.6
(22) Anmeldetag: 19.05.1998
(51) Int. Cl.: G02C 7/04

(54) **Multifokale Kontaktlinse**

(30) Priorität: 25.06.1997 DE 19726918
(71) Anmelder: Wöhlk Contact-Linsen GmbH, 24232 Schönkirchen (DE)
(72) Erfinder: Malchow, Volker, 24105 Kiel (DE); Rothe, Eckhard, 24232 Schönkirchen (DE); Grimmenstein, Klaus, 24232 Schönkirchen (DE)
(74) Vertreter: Müller-Rissmann, Werner Albrecht, Dr.

(57) **Zusammenfassung**

Die erfindungsgemäße multifokale Kontaktlinse besitzt einen im wesentlichen sphärischen Linsenkörper, welcher eine im wesentlichen konvexe äußere Oberfläche aufweist, eine im wesentlichen konkave innere Oberfläche und einen optischen Zentralpunkt, mit einer horizontalen und einer vertikalen Achse, welche sich im optischen Zentralpunkt schneiden, besagte Achsen sind horizontal und vertikal in dem Sinne, daß die getragene Linse auf einem menschlichen Auge in einer gewöhnlich aufrechten Stellung ist, welche eine zentral angeordnete optische Zone, einen Linsenaußenbereich und einen Randbereich besitzt, und mit außerhalb der optischen Zone auf dem Linsenaußenbereich angeordneten mindestens zwei verdickten Bereichen, wobei mindestens zwei verdickte Bereiche zur Einstellung einer bestimmten Orientierung der Kontaktlinse relativ zum menschlichen Auge zwischen der optischen Zone und dem Randbereich auf dem Linsenaußenbereich seitlich zu der vertikalen Mittelachse angeordnet sind.

Erfindungsgemäß ist auf der Oberfläche von besagtem Linsenkörper ein vorgeschriebener Nahsichtwert zumindest in einem unteren Sichtbereich und ein vorgeschriebenen Fernsichtwert in einem oberen Sichtbereich verteilt, der Übergang zwischen den Sichtbereichen geglättet und jeder der Sichtbereiche zumindest hinsichtlich der sphärischen Aberration individuell und unabhängig vom einem anderen Sichtbereich korrigiert.

## Beschreibung

Die Erfindung betrifft eine multifokale Kontaktlinse mit einem im wesentlichen sphärischen Linsenkörper, welcher eine im wesentlichen konvexe äußere Oberfläche aufweist, eine im wesentlichen konkave innere Oberfläche und einen optischen Zentralpunkt, mit einer horizontalen und einer vertikalen Achse, welche sich im optischen Zentralpunkt schneiden. Besagte Achsen sind horizontal und vertikal in dem Sinne, daß die getragene Linse auf einem menschlichen Auge in einer gewöhnlich aufrechten Stellung ist, welche eine zentral angeordnete optische Zone, einen Linsenaußenbereich und einen Randbereich besitzt und mit außerhalb der optischen Zone auf dem Linsenaußenbereich angeordneten mindestens zwei verdickten Bereichen, wobei mindestens zwei verdickte Bereiche zur Einstellung einer bestimmten Orientierung der Kontaktlinse relativ zum menschlichen Auge zwischen der optischen Zone und dem Randbereich auf dem Linsenaußenbereich seitlich zu der vertikalen Mittelachse angeordnet sind.

Kontaktlinsen mit Lagestabilisierung der Linse auf dem menschlichen Auge dienen z.B. der Korrektur abhängiger Fehlsichtigkeiten des Auges (z.B. Astigmatismus). Die Stabilisierung der Achsenlage der Kontaktlinse dient dazu, die Drehbewegung der Kontaktlinse auf dem Auge zu unterbinden und die Orientierung der Kontaktlinse auch nach einem Lidschlag sicherzustellen. Es sind verschiedene Stabilisierungs- prinzipien bekannt, um eine Lagestabilisierung einer Kontaktlinse auf einem Auge zu erreichen.

Die verschiedenen Lagestabilisierungen sind insbesondere in der EP 0 452 549 beschrieben. Die dort beschriebene dynamische Stabilisierung von Kontaktlinsen ist insbesondere für multifokale Kontaktlinsen geeignet. Bei den multifokalen Kontaktlinsen unterscheidet man Kontaktlinsen mit und ohne Lagestabilisierung. Will man verschiedene Bereiche der optischen Zone definitiv einem Fernsichtbereich und einem Nahsichtbereich zuordnen, so kann man das insbesondere bei Kontaktlinsen mit einer Lagestabilisierung.

Vorteilhafte Ausgestaltungen der optischen Zone sind beispielsweise aus der US 5,151,723 und der US 4,693,572 bekannt. Der Nachteil der dort beschriebenen Gestaltung der optischen Zone ist darin zu sehen, daß an dem seitlichen Rändern der Kontaktlinse starke Dickenänderungen erfolgen, welche zu einer Reizung des Augenoberlides führen können. Als nachteilig bei den in der US 5,151,723 und der US 4,693,572 beschriebenen Kontaktlinsen ist insbesondere das verwendete Stabilisierungsprinzip anzusehen.

Der vorliegenden Erfindung liegt die Aufgabe zugrunde, eine sichere Lagestabilisierung einer Kontaktlinse auf dem Auge eines Kontaktlinsenträgers mit einer multifokalen Gestaltung der optischen Zone so zu verbinden, daß die entstehende multifokale Kontaktlinse auf einem menschlichen Auge möglichst reizfrei getragen werden kann.

Diese Aufgabe wird erfindungsgemäß durch eine multifokale Kontaktlinse nach dem kennzeichnenden Teil des ersten Patentanspruchs gelöst.

Die erfindungsgemäße multifokale Kontaktlinse besitzt einen im wesentlichen sphärischen Linsenkörper, welcher eine im wesentlichen konvexe äußere Oberfläche und eine im wesentlichen konkave innere Oberfläche aufweist. Im optischen Zentralpunkt schneiden sich die horizontale und die vertikale Achse, wobei besagte Achsen horizontal und vertikal in dem Sinne sind, daß die getragene Linse auf einem menschlichen Auge in einer gewöhnlich aufrechten Stellung ist. Auf der Oberfläche der Kontaktlinse unterteilt sich die Linse in eine zentral angeordnete optische Zone, einen Linsenaußenbereich und einen Randbereich. Auf dem Linsenaußenbereich sind dabei zur Lagestabilisierung der Linse auf dem Auge des Kontaktlinsenträgers außerhalb der optischen Zone mindestens zwei verdickten Bereichen angeordnet, wobei mindestens zwei verdickte Bereiche zur Einstellung einer bestimmten Orientierung der Kontaktlinse relativ zum menschlichen Auge seitlich zu der vertikalen Mittelachse angeordnet sind.

Erfindungsgemäß ist auf der Oberfläche von besagtem Linsenkörper ein vorgeschriebener Nahsichtwert zumindest in einem unteren Sichtbereich und ein vorgeschriebenen Fernsichtwert in einem oberen Sichtbereich verteilt. Dies ist z.B. bereits bei den aus den US 5,151,723 und der US 4,693,572 bekannten Kontaktlinsen der Fall. Dabei ist der Übergang zwischen den Sichtbereichen aber geglättet und zusätzlich jeder der Sichtbereiche zumindest hinsichtlich der sphärischen Aberration individuell und unabhängig vom einem anderen Sichtbereich korrigiert.

Erst diese erfindungsgemäße Kombination der Merkmale, welche durch den Stand der Technik nicht nahegelegt ist, ermöglicht die Erfüllung der Aufgabe. Die Glättung der Übergänge zwischen den Sichtbereichen sorgt für eine wesentliche Herabsetzung der Augenlidreizungen insbesondere am Rand der optischen Zone, wo die unterschiedlichen Radien der Sichtbereiche sonst zu einem scharfen Dickensprung führen. Zusätzlich ist jeder der Sichtbereiche zumindest hinsichtlich der sphärischen Aberration korrigiert, was zu einer besseren Abbildung durch die Kontaktlinse auf den Augenhintergrund führt und so einen besseren Seheindruck erzeugt.

Die Glättung des oder der Übergange zwischen den Sichtbereichen sollte vorteilhafterweise bildsprungfrei erfolgen, wodurch die sich ergebende multifokale Kontaktlinse einer Gleitsichtlinse zumindest ähnlich wird.

Zu beachten ist, daß die Pupillenbewegung relativ zur Kontaktlinse auf beiden Augen des Kontaktlinsenträgers beim Übergang von Fern- zur Nahsicht unterschiedlich ist. Deshalb ist es vorteilhaft, wenn die Trennlinie nasal ansteigend ist und so die Pupille diese Trennlinie senkrecht durchstößt. Dadurch wird ein möglichst schneller Übergang von der reinen Fernsicht zur reinen Nahsicht ermöglicht.

Da im Normalfall beim Träger der Kontaktlinse die Fernsicht überwiegt, sollte der Fernsichtbereich größer sein als der Nahsichtbereich. Insbesondere bei Geradeaussicht ist dies anzustreben. Im Spezialfall kann aber auch die Nahsicht überwiegen (z.B. am Arbeitsplatz). Dann sollte bei Geradeaussicht der Nahsichtbereich den Bereich um den Zentralpunkt einschließen.

Da aber im Normalfall der Fernsichtbereich für den Kontaktlinsenträger dominierend ist, sollte der Übergang zwischen den Sichtbereichen unterhalb des optischen Zentralpunkts liegen.

Eine besonders gute Korrektur für das zu korrigierende Auge erhält man, wenn die Vorderfläche asphärisch gestaltet ist, wobei der Grad der Asphäre im Nahteil vom Grad der Asphäre im Fernteil unterschiedlich gewählt ist. Dann ist jeder Bereich für seine Aufgabenerfüllung optimal korrigierbar.

Indem man der optischen Zone eine im wesentlichen dreieckförmige Gestalt verleiht, erzielt man eine optimal große optisch nutzbare Zone.

Dabei sollte die optische Zone oberhalb der Erhebungen zumindest bis zu einer Kreislinie verlaufen, welche durch die theoretische höchste Kammlinie der Erhebungen geht.

Vorteilhafterweise ist der Übergang zwischen Nah- und Fernteil in einem Bereich +/- 3 mm um die horizontale Mittelachse angeordnet ist. Dies haben Versuche ergeben.

Manchmal ist es auch vorteilhaft, wenn die Trennlinie zwischen Nah- und Fernteil gekrümmt ist, um den senkrechten Durchtritt der Pupille beim Übergang von Nah- auf Fernsicht sicherzustellen.

Es ist insbesondere auch vorteilhaft, die Trennlinie zwischen Fern- und Nahsichtzone relativ zur Stabilisierungsachse der Kontaktlinse auf dem Auge schräg anzuordnen.

Der Schnittpunkt der Trennlinie mit der vertikalen Achse senkrecht zur Stabilisierungsachse sollte unterhalb der horizontalen Stabilisierungsachse liegen. Dies ist insbesondere für seitliche Augenbewegungen sinnvoll.

Der Durchmesser des Fernsichtbereichs sollte größer als der Durchmesser des Nahsichtbereichs sein, um bei seitlichen Augenbewegungen keine Störung der Fernsicht zu erhalten.

Wenn die verdickten Bereiche zumindest jeweils an einem Punkt bei geöffnetem Auge auf dem Augenunterlid aufliegen, erhält man eine optimale Lagestabilität der Kontaktlinse auf dem Auge des Kontaktlinsenträgers.

Dabei sollten die verdickten Bereiche im wesentlichen unterhalb zu der horizontalen Mittelachse angeordnet sein.

Die Erfindung wird im folgenden anhand von Ausführungsbeispielen, unter Bezugnahme auf die beiliegenden Figuren, näher erläutert, wobei die nachfolgenden Beispiele keinen abschließenden Charakter für die Erfindung haben und weitere vorteilhafte Ausgestaltungen der Erfindung beinhalten.

Es sind zu sehen in
- Figur 1: eine Aufsicht auf eine erfindungsgemäße Kontaktlinse;
- Figur 2: einen ersten Schnitt durch die erfindungsgemäße Kontaktlinse aus Figur 1;
- Figur 3: einen zweiten Schnitt durch die erfindungsgemäße Kontaktlinse aus Figur 1;
- Figur 4: eine Detailansicht des Linsenaußenbereichs der Kontaktlinse aus Figur 1;
- Figur 5: eine auf dem Auge eines Kontaktlinsenträgers aufgesetzte Kontaktlinse aus Figur 1;
- Figur 6: eine seitliche Schrägansicht der Kontaktlinse aus Figur 1;
- Figur 7: eine Prinzipskizze zur Positionierung der verdickten Bereiche auf dem Linsenaußenbereich bei einer Kontaktlinse gemäß der in Figur 1 dargestellten Kontaktlinse;
- Figur 8: eine erste Variation der Gestaltung der optischen Zone der erfindungsgemäßen Kontaktlinse;
- Figur 9: eine zweite Variation der Gestaltung der optischen Zone der erfindungsgemäßen Kontaktlinse;
- Figur 10: eine dritte Variation der Gestaltung der optischen Zone der erfindungsgemäßen Kontaktlinse;
- Figur 11: eine vierte Variation der Gestaltung der optischen Zone der erfindungsgemäßen Kontaktlinse;
- Figur 12: eine fünfte Variation der Gestaltung der optischen Zone der erfindungsgemäßen Kontaktlinse;
- Figur 13: eine sechste Variation der Gestaltung der optischen Zone der erfindungsgemäßen Kontaktlinse; und
- Figur 14: eine weitere Variation der Gestaltung der optischen Zone der erfindungsgemäßen Kontaktlinse.

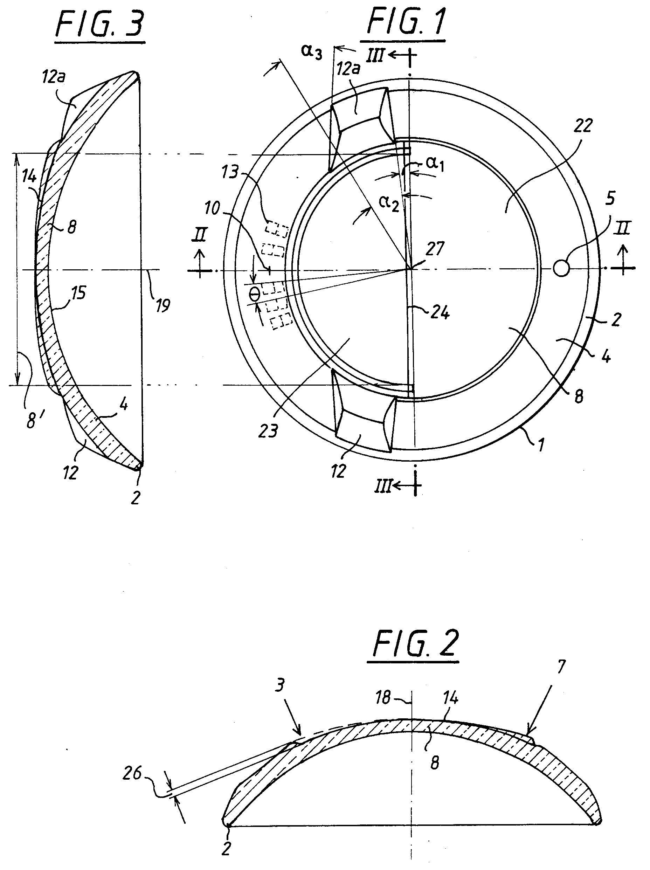

Wie in der Figur 1 bis 6 dargestellte Kontaktlinse (1) verwendet das gleiche Stabilisierungsprinzip wie die Kontaktlinse aus der EP 0 452 549.

Dabei sorgen die beiden verdickten Bereiche (12, 12a) an ihrer Unterseite für eine Auflage auf dem Augenunterlid (21a) auf dem geöffneten Auge (17) des Kontaktlinsenträgers zumindest in jeweils einem Auflagepunkt (20) (wobei bei der Anpassung eine lineare Auflage anzustreben ist), so daß die Lage der Kontaktlinse (1) auf dem Auge (17) sehr stabil ist.

Das Augenoberlid (21b) sorgt durch seine Bewegung dafür, daß diese leichte, zumindest punktförmige Auflage (20) nach einem Lidschlag nach einem Verrutschen der Kontaktlinse (1) auf dem Auge (17) wieder erzielt wird. Zu jederzeit befindet sich ein Teil (4a, 4b) der Kontaktlinse (1) sowohl unter dem Augenober(21b) als auch unter dem Augenunterlid (21a), sodaß die Kontaktlinse (1) auf dem geöffneten Auge (17) einen sicheren Halt findet. Außerdem wird dadurch eine Reizung der Augenlider durch die Kontaktlinse minimiert.

Je nach der Augenlidgeometrie des Trägers der Kontaktlinse (1) können dabei die Winkel (α₁, α₂, α₃) zur Festlegung der verdickten Bereiche (12, 12a) individuell angepaßt werden. Dabei gibt der Winkel α₁ die Lage des Mittelpunktes der oberen Begrenzungslinie des verdickten Bereiches (12a) relativ zur horizontalen Mittelachse (19) an. Der Winkel α₂ liegt zwischen der Verbindungsgeraden des Zentralpunktes (27) zu dem Mittelpunkt der oberen Begrenzungslinie des verdickten Bereiches (12a) und der Verbindungsgeraden des Zentralpunktes (27) zu dem Mittelpunkt der unteren Begrenzungslinie des verdickten Bereiches (12a) und legt somit die Größe des verdickten Bereiches (12, 12a) auf dem Linsenaußenbereich (4) fest. Der Winkel α₃ wiederum liegt zwischen der Verbindungsgeraden des Zentralpunktes (27) zu dem Mittelpunkt der unteren Begrenzungslinie des verdickten Bereiches (12a) und dieser Verbindungsgeraden und legt somit die Orientierung dieser Verbindungs-geraden fest. Die Lage der unteren Begrenzungslinie des verdickten Bereiches (12a) ist dabei wesentlich dafür, wie der verdickte Bereich (12a) der Kontaktlinse (1) auf dem Augenunterlid (21a) aufliegen. In manchen Fallen ist es sinnvoll, daß auch die Lage der oberen Begrenzungslinie des verdickten Bereiches (12a) ermittelt wird, um den Auftreffwinkel des Augenoberlides (21b) auf die Begrenzungslinie des verdickten Bereiches (12a) zu optimieren. Die betreffenden Winkel (α₁, α₂, α₃) für eine Kontaktlinse (1) können dabei für den linken und den rechten verdickten Bereich (12, 12a) seitlich der vertikalen Mittelachse (18) und für die Kontaktlinse (1) für das linke und das rechte Auge (17) des Kontaktlinsenträgers unterschiedlich sein.

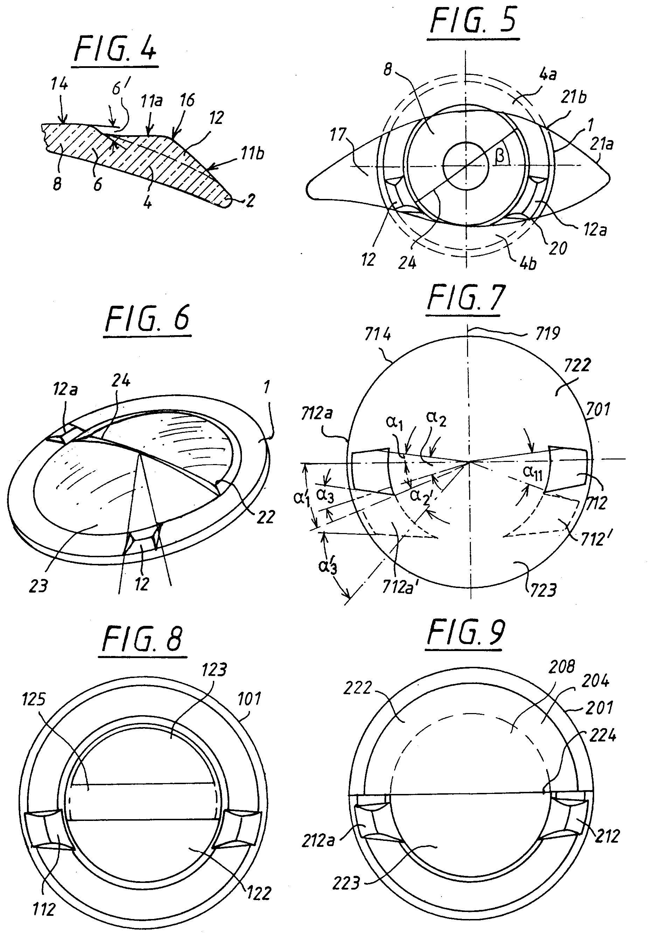

In der Figur 4 ist der Linsenaußenbereich (4) im Bereich eines verdickten Bereiches (12) nocheinmal vergrößert dargestellt. Bei der Dimensionierung der verdickten Bereiche (12) ist auch darauf zu achten, daß die inneren und äußeren Begrenzungsflächen (11a, 11b) mit ihren Neigungen und damit auch die sich ergebende, abgerundete zentrale Erhebung (16) mit der Dicke der dort angeordneten optischen Zone (8) insoweit korrespondieren, daß die Dickendifferenz (6') in der Übergangszone (6) zwischen optischer Zone (8) und verdicktem Bereich (12) nicht zu groß wird.

Die in den Figuren 1 bis 6 dargestellte Kontaktlinse (1) besteht im wesentlichen aus einer konvexen äußerend Oberfläche (Linsenvorderfläche 14) und einer konkaven inneren Oberfläche (Linsenrückfläche 15). Sie besitzt eine zentral angeordnete optische Zone (8), welche von einem Linsenaußenbereich (4) umschlossen ist. Den äußeren Abschluß bildet der Randbereich (2) der Kontaktlinse (1).

Die verdickten Bereiche (12, 12a) sind im dargestellten Beispiel unterhalb der horizontalen Mittelachse (18) auf dem Linsenaußenbereich (4) angeordnet.

Außerdem ist auf dem Linsenaußenbereich (4) ein Farbpunkt (5) auf der vertikalen Achse (19) der Kontaktlinse (1) angeordnet. Dieser Farbpunkt (5) sorgt für das richtige Einsetzen der Kontaktlinse (1) auf dem menschlichen Auge (17) des Kontaktlinsenträgers.

Auf dem Linsenaußenbereich (4) sind auch weitere Markierungen (10) und Kennzeichnungen (13) angebracht, welche so angeordnet sind, daß der Augenarzt oder Optiker die Lage der auf dem Auge (17) eines Kontaktlinsenträgers aufgesetzten Kontaktlinse (1) beurteilen kann. Aus diesem Grund haben die einzelnen Zeichen (10, 13) zueinander einen festgelegten (gleichen oder ungleichen) Abstand bzw. Winkelabstand (θ) (bezogen auf den optischen Zentralpunkt) zueinander.

Die optische Zone (8) selbst ist unterteilt in einen Fernsichtteil (22) und einen Nahsichtteil (23). In dem in der Figur 1 dargestellten Beispiel verläuft die Trennlinie (24) zwischen den Fernsichtteil (22) und dem Nahsichtteil (23) parallel zur horizontalen Mittelachse (19) unterhalb des optischen Zentralpunktes (27). Sie kann aber auch, wie die noch folgenden Variationen der erfindungsgemäßen Kontaktlinse in den weiteren Figuren zeigen werden unter einem Winkel β verlaufen, wobei der Winkel β zwischen der Verbindungsgeraden der Enden (d.h. im Übergangsbereich zwischen optischer Zone (8) und Linsenaußenbereich (4)) der Trennlinie (24) und der vertikalen Mittelachse (19) liegt.

Wie in der Figur 6 sehr deutlich zu sehen, besitzen diese beiden Bereiche (22, 23) der optischen Zone (8) eine unterschiedliche Krümmung auf der Linsenvorderfläche (14) (diese unterschiedliche Krümmung des Fernsicht- und Nahsichtteils (22, 23) könnte sich auch auf der Linsenrückfläche (15) befinden), wodurch unterschiedliche optische Wirkungen im Nah- (23) und Fernsichtbereich (22) erzielt werden. Durch diese unterschiedlichen Vorderflächenradien erhält man seitlich der vertikalen Mittelachse (19) auf der Trennlinie (24) einen Sprung beim Übergang von dem Fernsichtbereich (22) in den Nahsichtbereich (23) und umgekehrt, welcher am Rand der optischen Zone (8) am größten ist. Dieser Sprung der Trennlinie (24) wird geglättet, so daß um die Trennlinie (24) zumindest seitlich der horizontalen Mittelachse (19) in einem Übergangsbereich eine Gleitsichtzone entsteht, welche aber aufgrund der Größe der Pupille relativ zu dieser Gleitsichtzone als solche vom Gehirn des Kontaktlinsenträgers nicht erkannt wird. Diese Glättung der Trennlinie (24) ist aber wesentlich für eine gute Verträglichkeit der Kontaktlinse (1) auf dem Auge (17) des Kontaktlinsenträgers.

Letztendlich führen die unterschiedlichen Radien der optischen Zone (8) auf der Linsenaußenfläche (14) zu einer unterschiedlichen Dicke (3, 7) der Kontaktlinse (1) in der optischen Zone (8), wobei die Gesamtdickendifferenz (26) maximal 0.1 mm nicht überschreiten sollte. Deshalb besitzt die Kontaktlinse (1) eine Glättung der optischen Zone (8) hin zum Linsenaußenbereich (4), um auch hier Irritationen der Augenlider (21a, 21b) zu verhindern.

Außerdem ist sowohl der Fernsichtbereich (23) als auch der Nahsichtbereich (22) hinsichtlich der sphärischen Aberration korrigiert, so daß die beiden Bereiche (22, 23) eine gute Abbildungseigenschaft besitzen.

Die Größe der optischen Zone (8) für den Nahsichtbereich (22) und den Fernsichtbereich (23) ist im Durchmesser (8') unterschiedlich groß. Der zu wählende Durchmesser der beiden Bereiche (22, 23) ist dabei für jedes Auge (17) individuell zu ermitteln.

In der Figur 7 sind nochmals die unterschiedliche Positionierungsmöglichkeiten der verdickten Bereiche (712, 712a, 712', 712a') auf der Vorderfläche der Kontaktlinse (701) dargestellt. Dabei können die verdickten Bereiche (712, 712a, 712', 712a') auch so auf der Linsenvorderfläche (714) verteilt sein, daß seitlich der vertikalen Mittelachse (719) jeweils mehrere verdickte Bereiche ((712, 712'; 712a, 712a') angeordnet sind, wobei ihre jeweilige Gestalt (definiert durch die Winkel αₙ) jeweils unterschiedlich sein kann.

In den Figuren 8-13 sind verschiedene Variationen der optischen Fläche dargestellt.

In der Figur 8 ist in der optischen Zone zwischen dem Fernsichtteil (122) und dem Nahsichtteil (123) eine Übergangszone (125) angeordnet. Diese Übergangszone (125) sorgt für eine gleitenden Übergang zwischen Nahsichtteil (123) und Fernsichtteil (122). Dabei ist der Fernsichtteil (122) unterhalb des Nahsichtteils (123) angeordnet.

In der Figur 9 ist dargestellt, daß der Fernsichtteil (223) sich nicht nur auf die optische Zone (208) beschränken muß, sondern auch den Linsenaußenbereich (204) zumindest teilweise, wenn nicht ganz mitumfassen kann. Dies ist insbesondere in der oberen Hälfte der Kontaktlinse (201) möglich. Man erhält dadurch einen sehr große optisch verwendbare obere Hälfte der Kontaktlinse (201), welche für den Nah- oder Fernsichtbereich verwendet werden kann. Die Trennlinie (224) zwischen den beiden Bereichen (222, 223) geht dann auch bis in den Linsenaußenbereich (204). Im unteren Teil der Kontaktlinse (201) verhindern die Stabilisierungselemente (212, 212a) eine Vergrößerung der genutzten optischen Zone (208), da unterhalb der Stabilisierungselemente (212, 212a) die mögliche optische Zone (208) kaum verwendet werden kann.

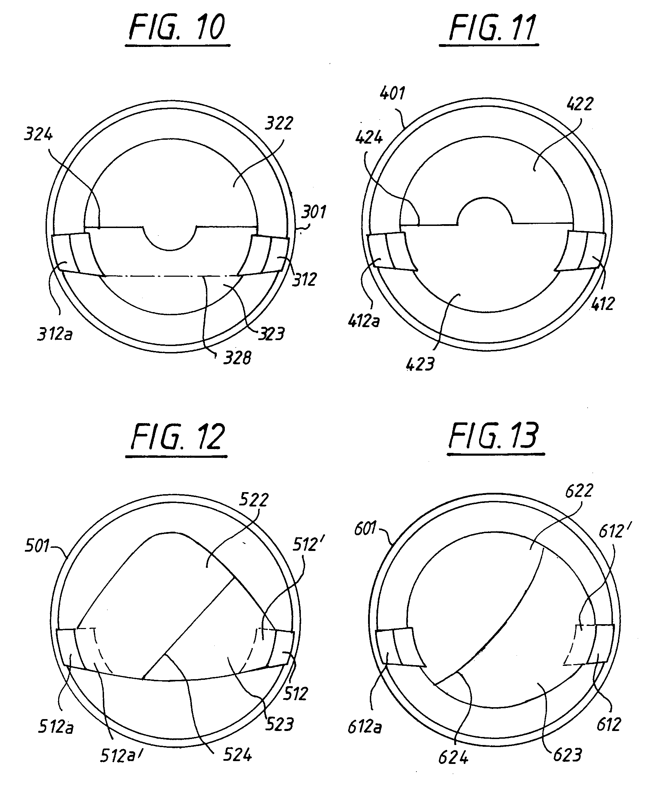

In der Figur 10 ist die Trennlinie (324) zwischen dem Fernsichtteil (322) und dem Nahsichtteil (323) in der Mitte zum Teil nach unten gekrümmt, um eine ungestörte Fernsicht durch die Kontaktlinse (301) in der Ruhestellung des Auges zu ermöglichen. Diese Krümmung der Trennlinie (324) sollte dabei aber oberhalb der Verbindungslinie (328) der Mittelpunkte der unteren Begrenzungslinien der verdickten Bereiche (312, 312a) enden.

In Figur 11 hingegen soll die Kontaktlinse (401) eine ungehinderte Sicht in der Ruhestellung für die Nahsicht ermöglichen. Deswegen ist die Trennlinie (424) in diesem Fall nach oben hin gekrümmt.

In der Figur 12 hat die dargestellte Kontaktlinse (501) eine optische Zone mit Fernsichtzone (522) und Nahsichtzone (523), welche eine im wesentlichen rechteckförmige Gestalt hat. Die dargestellte Kontaktlinse (501) soll auf dem rechten Auge eines Kontaktlinsenträgers getragen werden, wobei die Trennlinie (524) sowohl für das linke als auch für das rechte Auge nasal ansteigt. Im nasalen Bereich ist die Nahsichtzone (523), im Schläfenbereich die Fernsichtzone (522) angeordnet. In diesem Beispiel wird ein Teil der verdickten Bereiche (512', 512a') mit als optische Zone verwendet.

In der Figur 13 wiederum ist eine Kontaktlinse (601) mit einer runden optischen Zone dargestellt. Nasal ist hier der Nahsichtbereich (623) angeordnet, welcher durch die gekrümmte Trennlinie (624) vom Fernsichtbereich (622) getrennt wird. Auch in diesem Beispiel wird ein Teil eines verdickten Bereichs (612') mit als optische Zone verwendet.

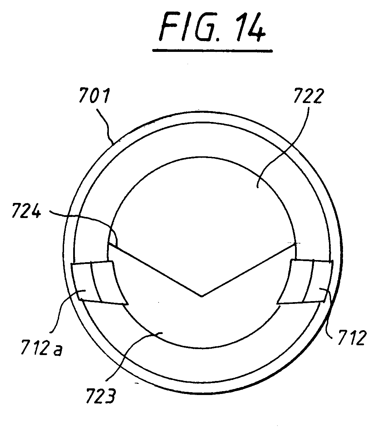

Um eine ungestörte Fernsicht zu garantieren und für beide Augen dieselbe Kontaktlinse verwenden zu können, kann auch die Trennlinie V-förmig gestaltet werden. Diese Variante ist in Figur 14 dargestellt. Die in der Figur 14 dargestellte Kontaktlinse (701) hat eine runde optischen Zone, welche durch die V-förmige Trennlinie (724) in einem Nahsichtbereich (723) und in einen Fernsichtbereich (722) unterteilt wird. Die verdickten Bereiche (712, 712a) liegen vollständig außerhalb der optischen Zone.

Bei den in den Figuren 1, 5, 8, 9, 10, 11, 12, 13 und 14 dargestellten Kontaktlinsen kann sich die optische Zone bis in den Linsenaußenbereich erstrecken, soweit dies erwünscht ist und als sinnvoll angesehen wird.

## Patentansprüche

1. Multifokale Kontaktlinse mit einem im wesentlichen sphärischen Linsenkörper, welcher eine im wesentlichen konvexe äußere Oberfläche aufweist, eine im wesentlichen konkave innere Oberfläche und einen optischen Zentralpunkt, mit einer horizontalen und einer vertikalen Achse, welche sich im optischen Zentralpunkt schneiden, besagte Achsen sind horizontal und vertikal in dem Sinne, daß die getragene Linse auf einem menschlichen Auge in einer gewöhnlich aufrechten Stellung ist, welche eine zentral angeordnete optische Zone, einen Linsenaußenbereich und einen Randbereich besitzt, und mit außerhalb der optischen Zone auf dem Linsenaußenbereich angeordneten mindestens zwei verdickten Bereichen, wobei mindestens zwei verdickte Bereiche zur Einstellung einer bestimmten Orientierung der Kontaktlinse relativ zum menschlichen Auge zwischen der optischen Zone und dem Randbereich auf dem Linsenaußenbereich seitlich zu der vertikalen Mittelachse angeordnet sind, dadurch gekennzeichnet, daß auf der Oberfläche von besagtem Linsenkörper ein vorgeschriebener Nahsichtwert zumindest in einem unteren Sichtbereich und ein vorgeschriebenen Fernsichtwert in einem oberen Sichtbereich verteilt ist, daß der Übergang zwischen den Sichtbereichen geglättet ist und daß jeder der Sichtbereiche zumindest hinsichtlich der sphärischen Aberration individuell und unabhängig vom einem anderen Sichtbereich korrigiert ist.

2. Multifokale Kontaktlinse nach Anspruch 1, dadurch gekennzeichnet, daß der Übergang zwischen den Sichtbereichen bildsprungfrei gestaltet ist.

3. Multifokale Kontaktlinse nach Anspruch 1 oder 2, dadurch gekennzeichnet, daß der Trennlinie nasal ansteigend ist.

4. Multifokale Kontaktlinse nach einem der Ansprüche 1-3, dadurch gekennzeichnet, daß der Fernsichtbereich größer als der Nahsichtbereich ist.

5. Multifokale Kontaktlinse nach einem der Ansprüche 1-3, dadurch gekennzeichnet, daß der Übergang zwischen den Sichtbereichen unterhalb des optischen Zentralpunkts liegend ist.

6. Multifokale Kontaktlinse nach einem der Ansprüche 1-5, dadurch gekennzeichnet, daß die Vorderfläche (14) asphärisch gestaltet ist, wobei der Grad der Asphäre im Nahteil (23) vom Grad der Asphäre im Fernteil (22) unterschiedlich gewählt ist.

7. Kontaktlinse nach einem der Ansprüche 1-6, dadurch gekennzeichnet, daß der optische Zone (8) eine im wesentlichen dreieckförmige Gestalt besitzt.

8. Kontaktlinse nach einem der Ansprüche 1-7, dadurch gekennzeichnet, daß der optische Zone (8) oberhalb der Erhebungen (12) zumindest bis zur Kreislinie verlaufend ist, welche durch die theoretische höchste Kammlinie der Erhebungen (12) geht.

9. Kontaktlinse nach einem der Ansprüche 1-8, dadurch gekennzeichnet, daß der Übergang zwischen Nah- (23) und Fernteil (22) in einem Bereich +/- 3 mm um die horizontale Mittelachse (18) angeordnet ist.

10. Kontaktlinse nach einem der Ansprüche 1-9, dadurch gekennzeichnet, daß die Trennlinie (24) zwischen Nah- (23) und Fernteil (22) gekrümmt ist.

11. Kontaktlinse nach einem der Ansprüche 1-10, dadurch gekennzeichnet, daß die Trennlinie (24) zwischen Fern- (22) und Nahsichtzone (23) relativ zur Stabilisierungsachse der Kontaktlinse auf dem Auge schräg angeordnet ist.

12. Kontaktlinse nach einem der Ansprüche 1-11, dadurch gekennzeichnet, daß der Schnittpunkt der Trennlinie mit der vertikalen Achse senkrecht zur Stabilisierungsachse unterhalb der vertikalen Stabilisierungsachse liegend ist.

13. Kontaktlinse nach einem der Ansprüche 1-12, dadurch gekennzeichnet, daß der Durchmesser des Fernsichtbereichs größer als der Durchmesser des Nahsichtbereichs ist.

14. Kontaktlinse nach einem der Ansprüche 1-13, dadurch gekennzeichnet, daß die verdickten Bereiche zumindest jeweils an einem Punkt bei geöffnetem Auge auf dem Augenunterlid aufliegend sind.

15. Kontaktlinse nach einem der Ansprüche 1-14, dadurch gekennzeichnet, daß die verdickten Bereiche im wesentlichen unterhalb zu der horizontalen Mittelachse angeordnet sind.
